(19) **Europäisches Patentamt**

**European Patent Office**

**Office européen des brevets**

(11) **EP 0 670 422 B1**

(12) **EUROPÄISCHE PATENTSCHRIFT**

(45) Veröffentlichungstag und Bekanntmachung des Hinweises auf die Patenterteilung:
**18.03.1998 Patentblatt 1998/12**

(51) Int Cl.6: **F02D 41/40**, F02D 33/00, F02D 23/02

(21) Anmeldenummer: **95101275.6**

(22) Anmeldetag: **31.01.1995**

(54) **Verfahren zur Minimierung der Stickoxidbildung bei luftverdichtenden, aufgeladenen Brennkraftmaschinen**

Method to minimize the production of nitrogen oxide in air compressing supercharged combustion engines

Méthode pour minimiser la formation d'oxide d'azote dans les moteurs à compression d'air sur alimentés

(84) Benannte Vertragsstaaten:
**AT DE FR IT NL SE**

(30) Priorität: **02.03.1994 DE 4406743**

(43) Veröffentlichungstag der Anmeldung:
**06.09.1995 Patentblatt 1995/36**

(73) Patentinhaber: **MAN Nutzfahrzeuge Aktiengesellschaft**
**80995 München (DE)**

(72) Erfinder:
• **D'Alfonso, Nunzio, Dr.**
**D-90441 Nürnberg (DE)**
• **Enser, Jürgen**
**D-90441 Nürnberg (DE)**
• **Schwarz, Axel, Dipl.-Ing.**
**D-90455 Nürnberg (DE)**

(56) Entgegenhaltungen:
**EP-A- 0 402 864        EP-A- 0 425 798**
**DE-A- 3 925 251        GB-A- 2 247 918**

• **PATENT ABSTRACTS OF JAPAN vol. 010, no. 281 (M-520), 25.September 1986 & JP 61 101630 A (ISUZU MOTORS LTD), 20.Mai 1986,**

**Beschreibung**

Die Erfindung bezieht sich auf ein Verfahren gemäß dem Oberbegriff des Patentanspruches 1.

Zur Verminderung der Stickoxidbildung ist es bekannt, zusätzlich zu der üblichen drehzahlabhängigen Spritzbeginnabstimmung, den Spritzbeginn bei zunehmender Last der Brennkraftmaschine, ausgehend von der Einstellung für den minimalen Kraftstoffverbrauch in Richtung spät zu verstellen. Die Spritzbeginnverstellung senkt die Verbrennungstemperatur und daraus resultierend die Bildung von Stickoxid. Die Zunahme der HC-Anteile im Abgas kann durch einen Oxidationskatalysator kompensiert werden. Durch die Späteinstellung des Spritzbeginns wird die Abgastemperatur erhöht, wodurch der Katalysator schneller aktiviert wird. Bei abnehmender Last wird der Spritzbeginn wieder in Richtung nach früh zurückgestellt, wodurch sich der Wirkungsgrad der Brennkraftmaschine aber auch die Stickoxidemission erhöhen. Eine derartige, nur lastabhängige Spritzbeginnverstellung hat den nachgewiesenen Nachteil, daß die Stickoxidemissionen höher liegen müssen als das mögliche Minimun. ( DE-OS 39 25 251 )

Der Späteinstellung des Spritzbeginns wird bei aufgeladenen Motoren bei hoher Motorbelastung meistens eine Grenze von der Abgastemperatur gesetzt. Auch der hochschnellende Kraftstoffverbrauch, der entgegen der Stickoxidbildung naturgemäß verläuft, setzt eine Grenze, die jedoch durch Maßnahmen wie Einspritzdruck und Brennraumkonfiguration zu günstigeren Bedingungen verschoben wird.

Bei hoher Belastung besitzt der aufgeladene Motor mit den heute üblichen Aufladegraden > 1,5 derart hohe Ladeluftdrücke und -temperaturen (auch nach Ladeluftkühler), daß die Selbstzündung und Verbrennung bei den üblichen Verdichtungsverhältnissen ordentlich, ohne Bildung von schädlichen Bestandteilen wie unverbrannten Kohlenwasserstoffen und Aldehyden, verlaufen.

Auch bei niedriger Motorbelastung ist es jedoch notwendig, die Stickoxidemission zu minimieren. Scharfe gesetzliche Bestimmungen führen dazu, daß der Motor im gesamten Kennfeld auf minimalst mögliche Stickoxidemissionen eingestellt werden muß. Im Schwachlastbereich, in dem, insbesondere bei turboaufgeladenen Brennkraftmaschinen, die Ladeluft keine oder kaum eine Temperatur- und Druckerhöhung im Lader erfährt, sind die physikalischen Zustände der Ladung im Zylinder bei einem zur Minimierung der Stickoxidbildung eingestellten Spritzbeginn derart, daß selbst eine kleine Temperatursenkung zu unvollständigen Verbrennungsverläufen bis zu Fehlzündungen führt. Die Folgen sind erhöhte Konzentrationen von unverbrannten Kohlenwasserstoffen und Aldehyden im Abgas, Weiß-Blaurauch und Geruchsbelästigung.

Bekannt sind Systeme, die beim Kaltstart und mit kalter Maschine beim Warmlaufen eine Frühverstellung des Spritzbeginns bewirken, um den Motorstart zu verbessern und die Blaurauchemission am Auspuff während der Warmlaufphase zu vermindern.

Der Erfindung liegt die Aufgabe zugrunde, bei betriebswarmer Maschine die Stickoxidemissionen des Motors im ganzen Kennfeld bis zur äußersten Grenze der Spritzbeginnverspätung zu minimieren, die, ladelufttemperaturabhängig, noch eine sichere Zündung und eine vollständige Verbrennung gewährleistet.

Erfindungsgemäß wird diese Aufgabe durch die kennzeichnenden Merkmale des Patentanspruches 1 gelöst.

Dadurch, daß der Spritzbeginn als eine Funktion der Ladelufttemperatur t verstellt wird läßt sich ein Minimum an Stickoxidemission erreichen, daß sich an der Grenze der Stabilität von Zündung und Verbrennung befindet. Diese Grenze ist von der Kompressionsendtemperatur und deshalb von der Ladelufttemperatur bestimmt. Bei Temperaturen der Ladeluft tiefer als die normale, die jederzeit im Laufe des Jahres, aber besonders im Winter vorkommen, wäre diese Grenze unterschritten, wenn der Einspritzbeginn so eingestellt bliebe wie bei der normalen Temperatur. Die minimalst mögliche Stickoxidemission bei normaler Temperatur würde unter Inkaufnahme von stark erhöhten Emissionen an Unverbranntem (Blau-Weißrauch, Geruch ) bei niedrigen Temperaturen der Ladeluft erreicht. Selbst Oxidationskatalysatoren wären im Schwach- und Nullast-Bereich und bei teilweise geschlepptem Motor unwirksam.

Vorteilhafte Verfahrensmerkmale können den Unteransprüchen 2 bis 4 entnommen werden.

Die Vorteile der Erfindung werden an Hand von Zeichnungen erläutert. Es zeigt:

Fig. 1    den Verlauf der Stickoxid- und HC-Emissionen bei verschiedenen Ladelufttemperaturen als Funktion des Spritzbeginns

Fig. 2    die Korrektur des Spritzbeginns als eine Funktion der Ladelufttemperatur

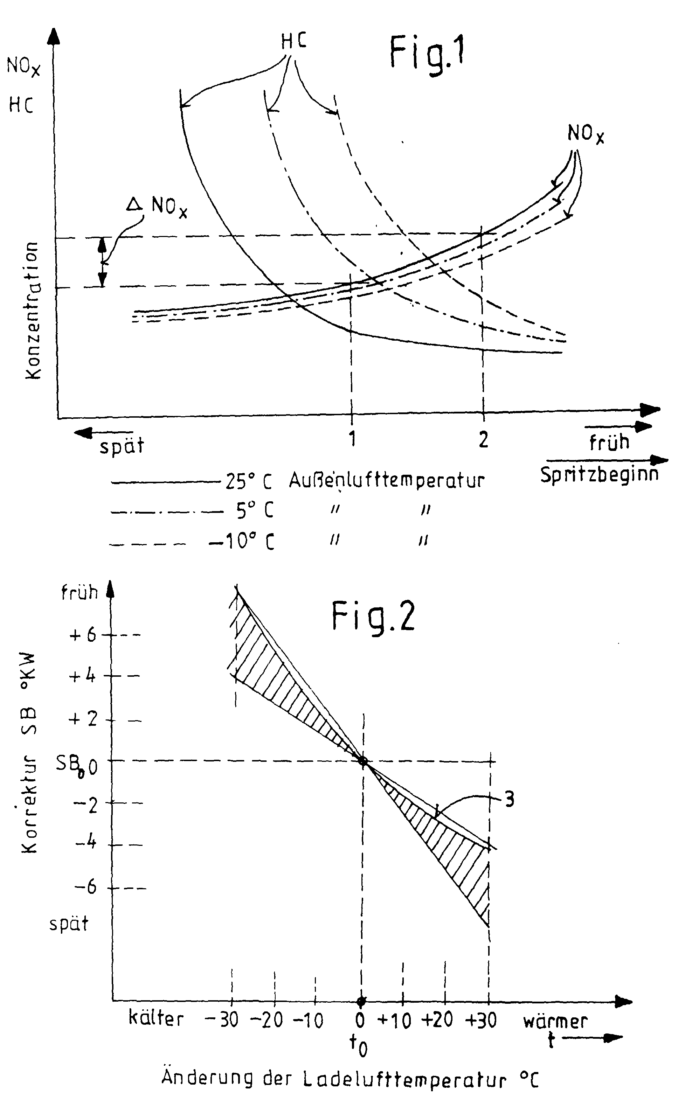

Die Kurven gemäß Fig. 1 zeigen den Verlauf der Stickoxid- und HC-Emissionen für verschiedene Ladelufttemperaturen t. Sinkt die Außentemperatur, dann ist die Ladelufttemperatur t bei Schwach- und Nullast kälter und der Spritzbeginn muß früher eingestellt werden, damit die HC-Emission begrenzt bleibt. Dies gilt insbesondere für Motoren mit Ladeluftkühler ohne Temperaturregelung. Besitzt man keine Möglichkeit, so wie die Erfindung aufzeigt, den Spritzbeginn über die Ladelufttemperatur t zu beeinflussen, muß man den Spritzbeginn so früh stellen, daß auch bei kalter Ladeluft die HC-Emission begrenzt bleibt. Bei normaler Ladelufttemperatur befindet sich der Motor dann nicht mehr in der optimalen Lage, die vom Spritzbeginn 1 bestimmt ist, sondern in einer ungünstigen Lage, die vom Spritzbeginn 2 bestimmt ist.

Die Erfindung ermöglicht deshalb bei normalen Temperaturen einen Vorteil in den $NO_x$-Emissionen, der $\Delta NO_x$ genannt wird.

Wenn höhere Temperaturen herrschen als die normalen ist es sogar möglich, noch spätere Spritzbeginne einzuregeln und damit die bei der Motorabnahme festgestellten $NO_x$-Konzentrationen in den Abgasen zu unterbieten.

Fig. 2 zeigt den Verlauf der Korrektur des Spritzbeginns SB über der Änderung der Ladelufttemperatur t. Mit $t_0$ und $SB_0$ sind die Normaltemperatur der Ladeluft, die sich bei Normbedingungen der Umgebung im Ladeluftrohr der Brennkraftmaschine einstellt, bzw. der Spritzbeginn der die minimale $NO_x$ - Konzentration im Abgas an der Grenze des schnellen HC-Anstiegs bei der Temperatur $t_0$ verursacht, gekennzeichnet. Die Korrektur bewegt sich im schraffierten Feld. Ein Beispiel für die Korrektur ist die Linie 3.

Selbstverständlich ist die Spritzbeginnkorrektur über die Ladelufttemperatur t nicht nur bei betriebswarmem Motor, sondern auch bei kaltem Motor wirksam.

Eine zusätzliche Korrektur der Spritzbeginneinstellung über die Temperatur eines Motorbauteils, wie sonst bei anderen Vorrichtungen bekannt, kann auch zusätzlich verwendet werden.

## Patentansprüche

1. Verfahren zur Minimierung der Stickoxidbildung bei luftverdichtenden, aufgeladenen Brennkraftmaschinen, insbesondere für Straßenfahrzeuge, bei dem die Stickoxidbildung durch so späte Einstellung des Spritzbeginns nach OT-Stellung unterdrückt wird, daß, insbesondere bei schwacher Motorbelastung, die Grenze erreicht wird, nach der die Emission anderer schädlicher Abgaskomponenten, wie unverbrannte Kohlenwasserstoffe, in unerwünschter Weise ansteigen, dadurch gekennzeichnet, daß der Spritzbeginn in Abhängigkeit der Ladelufttemperatur verstellt wird und zwar derart, daß bei einer Ladelufttemperatur unterhalb eines Normzustandes der Spritzbeginn in Richtung früh und bei ansteigender Ladelufttemperatur wieder in Richtung spät verstellt wird.

2. Verfahren nach Anspruch 1, dadurch gekennzeichnet, daß die Spritzbeginnverstellung als Funktion der Ladelufttemperatur in einem Korrekturkennfeld eines elektronischen Steuergerätes zur Regelung /Steuerung des Spritzbeginns über der Motor-Drehzahl und/oder -Belastung gespeichert wird.

3. Verfahren nach Anspruch 1, dadurch gekennzeichnet, daß der Spritzbeginn SB, zumindest in einem Bereich von 0 - 30 % des maximalen Motordrehmoments, über die Ladelufttemperatur t nach der Gleichung $SB = SB_0 + 0{,}2\,(t - t_0)$ in °KW korrigiert wird, wobei der Index O den Normzustand bei 25° C bedeutet.

4. Verfahren nach Anspruch 2, dadurch gekennzeichnet, daß die Korrektur stärker bei abnehmender Temperatur t unterhalb des Normzustands $t_0$ zunimmt und schwächer bei zunehmender Temperatur t oberhalb $t_0$ abnimmt.

## Claims

1. Process for minimising the formation of oxides of nitrogen in air-compressing, turbocharged internal-combustion engines, particularly for on-road vehicles, in which process the formation of oxides of nitrogen is suppressed by setting the injection start so late after TDC position that particularly at low engine loads that limit will be reached beyond which the emission of other, harmful exhaust-gas substances, eg non-burned hydrocarbons, will increase in an undesirable manner, characterised in that the injection start is set as a function of the charge-air temperature in such a way that at charge-air temperatures below a given normal condition the injection is timed for an earlier start and as the charge-air temperature increases for a later start.

2. Process according to Claim 1, characterised in that the injection start timing as a function of the charge-air temperature is stored in a corrective diagram of an electronic control unit for controlling the injection start above the engine speed and/or engine load.

3. Process according to Claim 1, characterised in that at least in a range from 0 to 30 % of the maximum engine torque the injection start SB is corrected in °crankshaft via the charge-air temperature t on the basis of the equation $SB = SB_0 + 0.2\,(t - t_0)$, index 0 standing for the normal condition at 25°C.

4. Process according to Claim 2, characterised in that the correction will increase more powerfully at a falling temperature t below normal condition $t_0$ and less powerfully at an increasing temperature t above $t_0$.

## Revendications

1. Procédé servant à réduire au minimum la formation d'oxyde d'azote dans le cas de moteurs à combustion interne suralimentés, à compresseur d'air, en particulier pour des véhicules routiers, dans lequel la formation d'oxyde d'azote est empêchée par un réglage du début de l'injection après le point mort haut dans le sens du retard tel qu'en particulier lorsque la charge du moteur est faible on atteint la limite après laquelle l'émission d'autre composants polluants des gaz d'échappement, tels que des hydrocarbures imbrûlés, croit d'une manière indésirable,

caractérisé en ce que
le début de l'injection est déplacé en fonction de la température de l'air comburant et en fait d'une manière telle que, quand la température de l'air comburant se trouve en dessous d'un état normal, le début de l'injection est déplacé ans le sens de l'avance et quand la température de l'air comburant est croissante le début de l'injection est à nouveau déplacé dans le sens du retard.

2. Procédé selon la revendication 1,
caractérisé en ce que
l'on met en mémoire le déplacement du début de l'injection, en tant que fonction de la température de l'air comburant, dans un champ caractéristique de correction d'un appareil électronique de commande servant à contrôler / commander le début de l'injection en fonction de la vitesse de rotation du moteur et/ou de la charge du moteur.

3. Procédé selon la revendication 1,
caractérisé en ce que

l'on corrige en °KW
le début de l'injection SB, au moins dans une zone de 0 à 30 % du couple moteur maximal, en fonction de la température de l'air comburant t, selon l'équation :

$$SB = SB_o + 0{,}2\,(\,t - t_o\,)$$

dans laquelle l'indice O correspond à l'état normal à 25°C.

4. Procédé selon la revendication 2,
caractérisé en ce que
la correction augmente plus fortement quand la température t décroît en dessous de l'état normal $t_0$ et plus faiblement quand la température t de l'état normal augmente au dessus de $t_0$.

EP 0 670 422 B1

Fig.1

Fig.2

5